# EUROPÄISCHE PATENTSCHRIFT

(11) **EP 1 882 112 B1**
(45) Veröffentlichungstag und Bekanntmachung des Hinweises auf die Patenterteilung: **26.09.2012**
(21) Anmeldenummer: 06742908.4
(22) Anmeldetag: 12.05.2006
(51) Int. Cl.: F16F 15/00, F16F 15/073

(54) **VORRICHTUNG ZUR SCHWINGUNGSENTKOPPLUNG**
OSCILLATION DECOUPLING DEVICE
DISPOSITIF DE DECOUPLAGE D'OSCILLATIONS

(30) Priorität: 19.05.2005 DE 102005023074; 13.09.2005 DE 102005043429
(43) Veröffentlichungstag der Anmeldung: 30.01.2008
(73) Patentinhaber: Fraunhofer-Gesellschaft zur Förderung der angewandten Forschung e.V., 80686 München (DE)
(72) Erfinder: MAYER, Dirk, 64295 Darmstadt (DE); MELZ, Tobias, 64285 Darmstadt (DE); THOMEIER, Martin, 64347 Darmstadt (DE)
(74) Vertreter: Rösler, Uwe
(86) Internationale Anmeldenummer: PCT/EP2006/004502
(87) Internationale Veröffentlichungsnummer: WO 2006/122726

(56) Entgegenhaltungen:
- DE-A1- 10 326 625
- DE-A1- 10 361 481
- JP-A- 63 203 941
- US-A- 5 645 260
- US-B1- 6 354 576

## Beschreibung

### Technisches Gebiet

Die Erfindung bezieht sich auf eine Vorrichtung zur Schwingungsentkopplung mit wenigstens einem einen Lasteintrag aufnehmenden Mittel, das mit wenigstens einer, wenigstens in Wirkrichtung des Lasteintrages elastisch verformbaren Einheit verbunden ist, die gegenüber einer Abstützeinheit wenigstens längs der Wirkrichtung, längs der zumindest ein Teil des Lasteintrags erfolgt, schwingend gelagert ist, und wenigstens einer Sensor-Aktoreinheit, die ein Last bedingtes Schwingen des Mittels erfasst und dem Schwingen des Mittels aktorisch entgegenwirkt, wobei an der wenigstens einen elastisch verformbaren Einheit wenigstens ein die Verformung beeinflussender Aktor derart appliziert oder in der Einheit integriert ist, dass der Aktor eine der Last bedingten elastischen Verformung innerhalb der Einheit entgegenwirkende Verformung initiert.

### Stand der Technik

In nahezu allen Bereichen der Technik treten Schwingungsprobleme auf, die es zu lösen gilt, bspw. durch Entkopplung einer Teilstruktur von ihrer vibrierenden Umgebung. Typische Beispiele hierfür stellen Lagerungen messempfindlicher Messapparaturen in Labors zur Entkopplung vom Trittschall und anderen Störungen mittels geeignet ausgelegter-Dämpfungssysteme dar, ähnliche Probleme treten jedoch auch in der Luft- und in Raumfahrtsystemen auf. Andererseits gilt es Quellen störender Vibrationen von einer sie umgebenden Struktur zu entkoppeln, wie dies beispielsweise bei der Lagerung von Antriebsaggregaten in Fahrzeugen, Flugzeugen oder Schiffen häufig anzutreffen ist.

Zu diesem Zweck sind unterschiedlich ausgebildete Vorrichtungen zur Schwingungsentkopplung bekannt, die unter Verwendung elastischer oder dämpfender Materialien eine rein passive Schwingungswirkung entfalten, deren Nachteile jedoch darin liegen, dass keine Adaption ah sich wechselnde Systemeigenschaften zur Aufrechterhaltung einer möglichst optimalen Schwingungsdämpfung möglich ist. Zudem führt der Einsatz möglichst weicher Lagerungen zwar zu einer wirkungsvollen Schwingungsdämpfung bzw. Schwingungsentkopplung, doch ist damit auch eine unpräzise Lagerung des entkoppelten Systems verbunden. Andererseits gewähren steifere Lagerungssysteme zwar präzisere Systempositionierungen, jedoch leidet die Qualität der Schwingungsentkopplung in entsprechender Weise, insbesondere bei Schwingungen mit kleinen Amplituden und hohen Frequenzen.

Neben rein passiv ausgebildeten Schwingungsentkopplungssystemen finden zunehmend mechatronische und adaptronische Lösungen Anwendung, bei denen die Schwingungsentkopplung mit Hilfe aktiv eingeleiteter Kompensationssignale erfolgt, die der kontrollierten Aktivierung von elektrodynamischen Aktoren, Magnetlagern oder Piezoaktoren dienen, die im Bereich schwingungsentkoppelnder Schnittstellen integriert und zur gezielten Einkopplung von Gegenschwingungen einen aktiven Beitrag zur Schwingungsentkopplung im Sinne einer Schwingungsreduzierung leisten.

Beispielsweise sei auf die US 5 645 260 verwiesen, in der eine Vorrichtung zur Schwingungsentkopplung beschrieben ist, die zwischen einer Last und einem vibrierenden Untergrund vorgesehen ist. Die Last ruht im wesentlichen auf einer elastische Trägerstruktur in Form eines Auslegerwinkels, längs dessen senkrecht zueinander orientierten Auslegerschenkel flächig ausgebildete Piezoaktoren angebracht sind, die aufgrund einer orthogonal zueinander orientierten Anordnung horizontal sowie auch vertikal gerichtete Schwingungen in den Auslegerwinkel zu induzieren in der Lage sind, letztlich mit dem Ziel einer wirkungsvoll Schwingungsentkopplung. Die bekannte Anordnung der Piezoaktoren bietet darüber hinaus den Vorteil, dass sie durch die Trägerstruktur vor schädigenden mechanischen Lasten weitgehend geschützt sind.

Eine weitere modulare Schnittstelle zum Dämpfen mechanischer Schwingungen geht aus der DE 103 61 481 A1 hervor, die zwischen einem Basisanschlußelement und einem Lastanschlußelement mehrere kinematisch miteinander gekoppelte Energiewandler-Systeme vorsieht, die gleichsam dem vorstehend erläuterten Schwingungsentkopplungssystem auf der gezielten Ansteuerung piezoelektrischer Wandlermaterialien basiert. Jedoch müssen die als piezoelektrische Stapelaktoren ausgebildeten Energiewandlersysteme unter mechanischer Vorspannung betrieben werden und gegen Belastung durch Schub und Torsion geschützt werden, woraus sich die Notwendigkeit umfangreicher mechanischer Schutzmaßnahmen für die Aktoren ergibt.

Die bekannten Vorrichtungen zur Schwingungsentkopplung stellen überwiegend an bestimmte Schnittstellen zwischen zwei schwingungstechnisch zu entkoppelnden Komponenten individuell angepaßte Systeme dar, deren Verwendung in anderen zu entkoppelnden Systemen nicht oder nur mit aufwendigen konstruktiven Änderungen einsetzbar sind. Zudem stellt die Integration der Piezoaktoren in die jeweilige Struktur einen hohen konstruktiven Aufwand dar, der unvermeidbar mit hohen Fertigungs-und Montagekosten verbunden ist.

Der JP 63203941 A ist eine gattungsgemäße Vorrichtung zur Schwingungsentkopplung zu entnehmen, von der als nächstkommenden Stand der Technik ausgegangen wird. Die Vorrichtung weist wenigstens ein einen Lasteintrag aufnehmendes Mittel, das mit wenigstens einer, wenigstens in Wirkrichtung des Lasteintrages elastisch verformbaren Einheit verbunden ist, die gegenüber einer Abstützeinheit wenigstens längs der Wirkrichtung, längs der zumindest ein Teil des Lasteintrags erfolgt, schwingend gelagert ist. Ferner ist eine wenigstens eine Sensor-Aktoreinheit vorgesehen, die ein Last bedingtes Schwingen des Mittels erfasst und dem Schwingen des Mittels aktorisch entgegenwirkt, wobei an der wenigstens einen elastisch verformbaren Einheit wenigstens ein die Verformung beeinflussender Aktor derart appliziert oder in der Einheit integriert ist, dass der Aktor eine der Last bedingten elastischen Verformung innerhalb der Einheit entgegenwirkende Verformung initiert.

### Darstellung der Erfindung

Der Erfindung liegt die Aufgabe zugrunde, eine gattungsgemäße Vorrichtung zur Schwingungsentkopplung, derart weiterzubilden, dass die Vorrichtung universell einsetzbar ist und keine Speziallösung für ein individuelles Schwingungsproblem darstellt. Die Vorrichtung soll einerseits die Vorteile einer elastisch passiven Lagerung mit aktorischen Komponenten aufweisen und zugleich die Möglichkeit bieten, sämtliche Komponenten für eine autarke Betriebsweise in einer Baueinheit zu integrieren. Damit soll ein einfach handhabbares System geschaffen werden, dass robust ist und unter erschwerten Umweltbedingungen einsetzbar ist.

Die Lösung der der Erfindung zugrunde liegenden Aufhabe ist im Anspruch 1 angegeben. Den Erfindungsgedanken vorteilhaft weiterbildende Merkmale sind Gegenstand der Unteransprüche sowie der Beschreibung insbesondere unter Bezugnahme auf die Ausführungsbeispiele zu entnehmen.

Lösungsgemäß ist eine Vorrichtung zur Schwingungsentkopplung mit wenigstens einem einen Lasteintrag aufnehmenden Mittel, das mit wenigstens einer, wenigstens in Wirkrichtung des Lasteintrages elastisch verformbaren Einheit verbunden ist, die gegenüber einer Abstützeinheit wenigstens längs der Wirkrichtung, längs der zumindest ein Teil des Lasteintrags erfolgt, schwingend gelagert ist, und wenigstens einer Sensor-Aktoreinheit, die ein Last bedingtes Schwingen des Mittels erfasst und dem Schwingen des Mittels aktorisch entgegenwirkt, wobei an der wenigstens einen elastisch verformbaren Einheit wenigstens ein die Verformung beeinflussender Aktor derart appliziert oder in der Einheit integriert ist, dass der Aktor eine der Last bedingten elastischen Verformung innerhalb der Einheit entgegenwirkende Verformung initiert, dadurch weitergebidet, dass die Abstützeinheit modulartig ausgebildet ist und als Tragstruktur für die wenigstens eine elastisch verformbare Einheit dient. Dabei ist die modulartige Abstützeinheit samt der wenigstens einen elastisch verformbaren Einheit und dem Mittel zur Lastaufnahme als Aktormodul derart ausgebildet ist, dass eine mechanische Kopplung zu wenigstens einem weiteren gleichartig ausgebildeten Aktormodul möglich ist, wobei die modulartig ausgebildeten Abstützeinheiten der wenigstens zwei Aktormodule in einem gekoppelten Zustand miteinander in Wirkverbindung treten und entweder a) die Mittel zur Lastaufnahme beider Aktormodule miteinander verbunden sind oder ein einziges Mittel vorgesehen ist, so dass die wenigstens eine elastisch verformbare Einheit pro Aktormodul mechanisch parallel miteinander verbunden sind, oder b) die Mittel beider Aktormodule jeweils getrennt voneinander mit der wenigstens einen elastisch verformbaren Einheit des jeweiligen Aktormoduls verbunden sind, so dass die elastisch verformbaren Einheiten beider Aktormodule jeweils in Serie auslenkbar sind. Zur Energieversorgung und/oder Signalansteuerung und/oder - auswertung des wenigstens einen Sensors und Aktors der einzelnen miteinander kombinierten Aktormodule ist eine modulartig ausgebildete Elektronikeinheit vorgesehen, die von einem Elektronikmodulgehäuse umfasst ist, das über wenigstens eine Verbindungsstruktur verfügt, über die das Elektronikmodulgehäuse mechanisch an wenigstens eines der kombinierten Aktormodule ankoppelbar ist. Schließlich ist wenigstens ein elektrisches Verbindungssystem vorgesehen, über das der wenigstens eine Sensor und/oder Aktor der einzelnen miteinander kombinierten Aktormodule mit der modulartig ausgebildeten Elektronikeinheit kontaktierbar ist.

Im Mittelpunkt der lösungsgemäßen Vorrichtung steht der Modulgedanke und eine damit verbundene einfache und vielseitige Verwendbarkeit der lösungsgemäßen Vorrichtung. Die für die elastische Einheit als Tragstruktur dienende Abstützeinheit ist als ein festes Modulgehäuse ausgebildet, in dem die für die Schwingungsaufnahme vorgesehene elastisch verformbare Einheit sowie die an bzw. auf ihr vorgesehene Aktorik zur gezielten Einleitung von Gegenschwingungen gegen störende äußere Schwingungseinflüsse geschützt untergebracht sind. Je nach Größe bzw. Stärke eines zu entkoppelnden statischen und/oder dynamischen äußeren Lasteintrages ist die Steifigkeit der elastisch verformbaren Einheit zu wählen, die in einer bevorzugten Ausführungsform membranartig ausgebildet ist und eine innere freie Querschnittsfläche des Modulgehäuses freitragend überspannt und an wenigstens zwei Bereichen, vorzugsweise an ihrem gesamten Umfangsrand mit dem Modulgehäuse im inneren verbunden ist. So kann die Elastizität bzw. die Steifigkeit oder der Hub der flächig ausgebildeten, elastisch verformbaren Einheit durch Material-, Form- und Dickenwahl entsprechend konfektioniert werden. Die elastisch verformbare Einheit stellt somit den elastischen, passiven Teil des Schwingungsentkopplungssystems dar und ist mit einem Mittel unmittelbar bzw. direkt verbunden, das vorzugsweise stabartig ausgebildet und senkrecht zur Flächenerstreckung der elastisch verformbaren Einheit orientiert ist, längs dessen der externe zu entkoppelnde Lasteintrag einwirkt, der letztlich zu einer Auslenkung bzw. Deformation des elastisch verformbaren Mittels senkrecht zur Flächenerstreckung des Mittels führt.
Eine weitere Möglichkeit das Steifigkeitsverhalten des elastischen, passiven Teils des Schwingungsentkopplungssystems einzustellen, besteht im Vorsehen von zwei oder mehreren elastisch verformbaren Einheiten innerhalb eines Modulgehäuses, die mechanisch parallel oder seriell geschaltet werden können, wobei im ersten Fall eine Kopplung der mindestens beiden elastisch verformbaren Einheiten mit dem einen, stabartig ausgebildeten Mittel vorzusehen ist, während im zweiten Fall diese Kopplung entfällt, und somit die elastisch verformbaren Einheiten anteilig den externen statischen und/oder dynamischen Lasteintrag aufzunehmen in der Lage sind.
Ebenso ist ein mechanisch serielles und/oder paralleles Verschalten von zwei oder mehr Modulen möglich. Hierbei dient die parallele Verschaltung von Modulen der Steigerung des Schwingungshubes, wobei in diesem Fall die stabartig ausgebildeten Mittel der Module nicht untereinander verbunden sind, während die serielle Verschaltung der Erhöhung der Steifigkeit und damit der Übertragung höherer Kräfte dient. In einer bevorzugten Ausführungsform werden die stabartig ausgebildeten Mittel der Module untereinander verbunden.

Zudem sind Kombinationen von mechanisch parallel und seriell geschalteten Modulen denkbar. Für eine übersichtlichere Darstellung des Erfindungsgedanken wird im Weiteren davon ausgegangen, dass innerhalb des vorbeschriebenen Modulgehäuses lediglich eine einzige membranartig ausgebildete elastisch verformbare Einheit vorgesehen ist.

Um die, bedingt durch einen extern anliegenden dynamischen Lasteintrag innerhalb der membranartig ausgebildeten elastisch verformbaren Einheit induzierten Schwingungen wirksam reduzieren zu können, ist die membranartige elastisch verformbare Einheit mit wenigstens einem, vorzugsweise mehreren flächig ausgebildeten elektromechanischen Wandlern bzw. Aktoren verbunden, die durch geeignete Ansteuerung eine kontrollierte Verformung der membranartig ausgebildeten elastisch verformbaren Einheit hervorrufen. Besonders eignen sich als elektromechanische Wandler piezoelektrische Plattenaktoren, die auf der Oberfläche der membranartig ausgebildeten elastisch verformbaren Einheit appliziert und/oder integriert sind und sich durch Anlegen einer elektrischen Spannung dehnen bzw. zusammenziehen, wodurch sie ein Biegemoment in die elastisch verformbare Einheit einleiten und zu einer Krümmung senkrecht zu Flächenerstreckung der Einheit führen. Auf diese Weise kann ein gezielt gesteuerter bzw. geregelter aktorischer Eingriff in das Schwingungsverhalten der elastisch verformbaren Einheit in bzw. entgegen der Wirkrichtung des externen Lasteintrages vorgenommen werden.

Zur Detektion des aktuellen Schwingungszustandes der elastisch verformbaren Einheit ist an der elastisch verformbaren Einheit wenigstens ein die Verformung der Einheit erfassender Sensor appliziert oder in der Einheit integriert. Gleichsam dem vorstehend erläuterten Aktorprinzip eignet sich für den Sensor in gleicher Weise ein elektromechanischer Wandler, beispielsweise in Form eines piezoelektrischen Plattensensors, der im Wege einer Verformung ein messtechnisch auswertbares Spannungssignal generiert, das zur Ansteuerung bzw. Regelung der mit der elastisch verformbaren Einheit verbundenen Aktoren verwendet wird. Alternativ oder in Kombination zu einer direkt mit der elastisch verformbaren Einheit verbundenen Sensorik ist es ebenfalls möglich, entsprechende Sensoren, beispielsweise in Form von Beschleunigungssensoren im Bereich des Lasteintrages oder des zu entkoppelnden Körpers, beispielsweise unmittelbar an einem mit dem Mittel verbundenen schwingenden Körper oder im Lastpfad des Lasteintrages längs des Mittels, das mit der membranartig ausgebildeten elastisch verformbaren Einheit verbunden ist, anzubringen. Unabhängig von der unterschiedlichen Ausbildung und Anbringung der Sensoren gilt es, das Schwingungsverhalten der wenigstens einen innerhalb des Modulgehäuses integrierten elastisch verformbaren Einheit zu erfassen, um Steuer- bzw. Regelsignale zur Aktivierung des wenigstens einen mit der elastisch verformbaren Einheit verbundenen Aktors zu generieren, mit dem Ziel einer die extern eingetragenen Schwingungen längs der membranartig ausgebildeten elastisch verformbaren Einheit zu vermindern.

Die Verarbeitung der seitens der Sensoren erzeugten Sensorsignale sowie die Generierung entsprechender Ansteuersignale für die Aktoren erfolgt vorzugsweise mit einer geeigneten Regelungslogik, die vorzugsweise auf Basis digitaler Signalverarbeitung basiert und aus Kostengründen auf sogenannten Low-Cost-Embedded Plattformen wie DSP, Mikrocontrollern, FPGA implementierbar ist.

Grundsätzlich ist es möglich, jegliche, sowohl für die Energieversorgung als auch Signalauswertung erforderlichen elektrischen Komponenten gemeinsam mit den vorstehend erläuterten Komponenten innerhalb des Modulgehäuses unterzubringen. Um die Modularität der lösungsgemäßen Vorrichtung zu erhalten bzw. zu optimieren erscheint es vorteilhaft, die zur Energieversorgung und/oder Signalansteuerung und/oder Signalauswertung des wenigstens einen Sensors und Aktors eine in das Modulgehäuse integrierbare oder an das bestehende Modulgehäuse applizierbare modulartig ausgebildete Elektronikeinheit vorzusehen. Insbesondere im Hinblick der Kombination zweier oder mehrerer Modulgehäuse, die jeweils über wenigstens eine elastisch verformbare Einheit mit entsprechender Sensorik und Aktorik verfügen und über ein gemeinsames Mittel zur Aufnahme einer externen statischen und/oder dynamischen Last verbunden sind und als solche im Weiteren als Aktormodule bezeichnet werden, bietet es sich an, die für die Energieversorgung und Signalansteuerung der einzelnen miteinander kombinierten Aktormodule erforderliche Elektronikeinheit in Form eines eigenen Elektronikmoduls auszubilden, das über ein eigenes Modulgehäuse verfügt und über ein entsprechendes mechanisches sowie auch elektrisches Verbindungssystem über wenigstens eines der kombinierten Aktormodule zu einem Gesamtsystem kombinierbar ist.

Von besonderem Interesse ist die Ausbildung der lösungsgemäßen Vorrichtung zur Schwingungsentkopplung in Form einer vollständig autonom und weitgehend autark arbeitenden Einheit, d.h. alle für eine effektive Schwingungsentkopplung einschließlich der Energieversorgung erforderlichen Komponenten sind in Form von Einzelmodulen zu einem Gesamtsystem zusammengefügt, das als Schnittstelle zwischen einem schwingenden Körper und einer entsprechenden Unterlage eingefügt werden kann.

Im Falle einer adaptiv ausgeführten Aktoransteuerung zur gezielten Auslenkung der membranartig ausgebildeten, elastisch verformbaren Einheit innerhalb eines Aktormoduls ist es möglich, die zur Ansteuerung der mit der elastisch verformbaren Einheit verbundenen Aktoren erforderlichen Referenzsignale von aussen zuzuführen, beispielsweise drahtlos unter Einsatz an sich bekannter Telemetrietechnik. Auf diese Weise ist es beispielsweise möglich, störende Vibrationen einer Rotationsmaschine durch extern gewonnene drehzahlsynchrone Triggersignale, die telemetrisch als Referenzsignale den Aktoren innerhalb der Aktormodule zugeführt werden, entsprechend zu unterdrücken. In diesem Fall sind keine weiteren Sensoren zur Erfassung des aktuellen Schwingungszustandes der elastisch verformbaren Einheit erforderlich, zumal die Ansteuerung der Aktoren durch extern vorgegebene Triggersignale, die häufig über bereits vorhandene Bussysteme zur Verfügung stehen, erfolgt. Stehen derartige externe Triggersignale nicht zur Verfügung, so besteht überdies die Möglichkeit das Störsignal mit Hilfe eines oder mehreren an der Störquelle applizierten Beschleunigungssensoren zu schätzen, wodurch gleichfalls entsprechende Referenzsignale generierbar sind.

Insbesondere bei Verwendung mehrerer modulartig lösungsgemäß ausgebildeter Vorrichtungen zur Schwingungsentkopplung, die beispielsweise an einer vibrierenden Maschine zur Unterstützung an unterschiedlichen Stellen zur Schwingungsentkopplung vorgesehen sind, bietet der Einsatz der digitalen Signalverarbeitung zur Regelungsimplementierung die interessante Möglichkeit, mit einem extern vorgesehenen Zentralrechner Daten auszutauschen. Hierzu sieht jedes einzelne Schwingungsentkopplungsmodul, das jeweils aus wenigstens einem Aktor-und einem Elektronikmodul besteht, eine Telemetrieeinheit zur drahtlosen Datenübertragung vor. Selbstverständlich ist es auch möglich, jedoch in den meisten Fällen mit technisch-konstruktiven Schwierigkeiten verbunden, den Datenaustausch auch drahtgebunden zu einem Zentralrechner durchzuführen. Durch die zentrale Zusammenführung und Auswertung aller zu einem schwingenden System vorliegenden Informationen kann eine Optimierung der die einzelnen Schwingungsmodule ansteuernde Referenzsignale durchgeführt werden. Ferner ist es möglich, in jedem einzelnen Schwingungsentkopplungsmodul auf Basis digitaler Signalverarbeitung Selbstdiagnosen durchzuführen, die durch Rückmeldung an den Zentralrechner zur Optimierung von Regelparametern zur Ansteuerung der einzelnen Aktormodule dienen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1 a, b: schematisierter Längsschnitt bzw. Teillängsschnitt durch ein Aktormodul,
- Fig. 2: schematisierte Längsschnittdarstellung durch eine modulartig ausgebildete Vorrichtung zur Schwingungsentkopplung,
- Fig. 3: schematisierte perspektivische Darstellung des in Figur 2 dargestellten Moduls,
- Fig. 4: Modulanordnung zur Schwingungsentkopplung eines schwingenden Aggregats,
- Fig. 5a-c: schematisierte Querschnittsdarstellung durch ein Aktormodul mit elastisch verformbarer Einheit,
- Fig. 6: Mechanische Serienschaltung zweier Aktormodule sowie
- Fig. 7: Mechanische Parallelschaltung zweier Aktormodule.

### Wege zur Ausführung der Erfindung, gewerbliche Verwendbarkeit

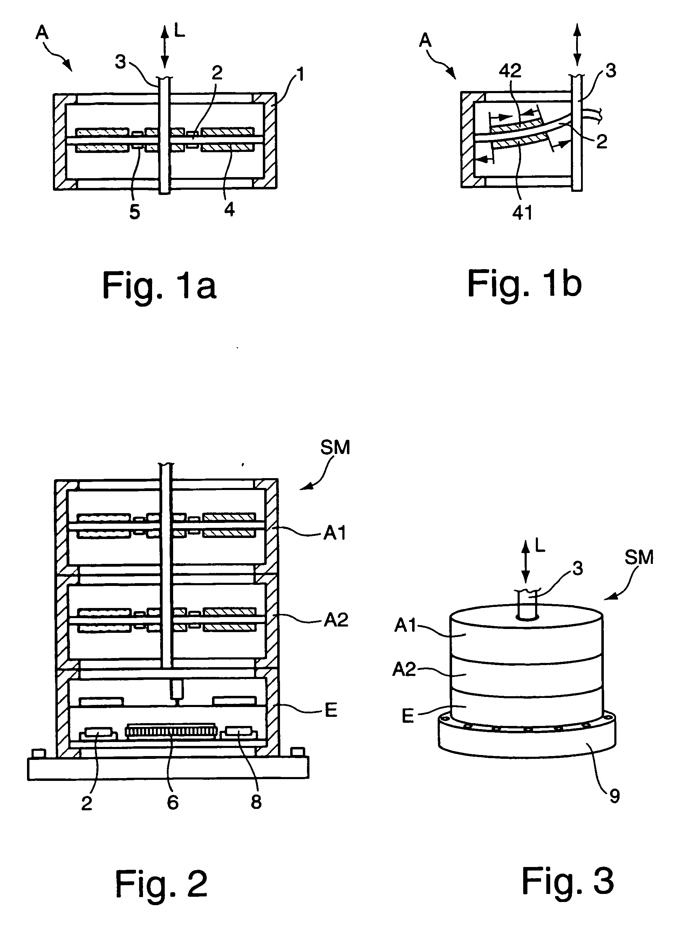

In Figur 1a ist eine schematisierte Längsschnittsdarstellung durch ein Aktormodul gezeigt, das von einem im Wesentlichen hohlzylinderförmig ausgebildeten Modulgehäuse 1 umfaßt ist. Das Modulgehäuse 1 dient als Tragstruktur für eine im inneren des Modulgehäuses 1 angebrachte, membranartig ausgebildete, elastisch verformbare Einheit 2, die als flächiges Element, gleichsam einer Blattfeder, den inneren freien Gehäusequerschnitt zumindest teilweise überspannt und an ihrem peripheren Umfangsrand mit der Innenwand des Modulgehäuses 1 fest verbunden ist. Mittig zur flächig bzw. membranartig ausgebildeten, elastisch verformbaren Einheit 2 ist ein stabförmig ausgebildetes Mittel 3 angebracht, dessen Stablängserstreckung im wesentlichen senkrecht zur Ebene der flächigen Ausbildung der Einheit 2 orientiert ist und längs dem ein externer Lasteintrag L auf das Aktormodul A und insbesondere auf die in dem Aktormodul A vorgesehene elastisch verformbare Einheit erfolgt.
Das Mittel 3 kann fest oder lösbar fest mit der elastisch verformbaren Einheit 2, beispielsweise im Wege einer Schraubverbindung verbunden sein. Durch die konstruktiv vorgegebene Krafteinleitung einer externen statischen oder dynamischen Last L über das Mittel 3 wird die elastisch verformbare Einheit 2 senkrecht zu ihrer Flächenerstreckung deformiert. Um diesen extern induzierten Deformationen, denen die elastische verformbare Einheit 2 ausgesetzt ist, schwingungsdämpfend entgegenzuwirken, sind an den Oberflächen der membranartig ausgebildeten elastisch verformbaren Einheit 2 flächig ausgebildete, energiewandelnde Aktoren 4 angebracht, vorzugsweise aus einer Piezokeramik, bleifreien Piezokeramik, einer elektrostriktiven Keramik, PVDF (Polyvinylidenfluorid), magnetostriktive Legierungen, Bimetalle oder aus einer Formgedächtnislegierung bzw. einem Formgedächtnispolymer, alles Wandlerwerkstoffe, die durch externe elektrische Spannungsversorgung in der Lage sind, ihre Raumform hinsichtlich ihrer Länge zu verändern.

In Figur 1b ist ein schematisierter Teillängsschnitt durch ein in Figur 1 a abgebildetes Aktormodul A dargestellt, mit zwei unmittelbar an der Ober- und Unterseite der elastisch verformbaren Einheit 2 angebrachten flächig ausgebildeten Piezoaktoren 41, 42, die derart angesteuert werden, dass der an der Oberseite der membranartig ausgebildeten elastisch verformbaren Einheit 2 angebrachte Piezoaktor 42 verkürzt, wohingegen der an der Unterseite vorgesehene Piezoaktor 41 ausgedehnt wird. Dies hat zur Folge, dass die elastisch verformbare Einheit 2 eine in der Bilddarstellung gemäß Figur 1b nach oben gerichtete Krümmung erfährt, wodurch das Mittel 3 nach oben ausgelenkt wird.

Das Prinzip der Schwingungsentkopplung sieht vor, die aktorisch bewirkte Auslenkung der elastisch verformbaren Einheit 2 z.B. genau gegenphasig zu der über das Mittel 3 extern anliegenden Lasteinwirkung L zu realisieren.

Ferner sind an der Ober- und Unterseite der membranartig ausgebildeten elastisch verformbaren Einheit 2 mehrere Sensoren 5 angebracht und/oder integriert, die gleichfalls wie die Aktoren aus einem Wandlerwerkstoff bestehen können. Selbstverständlich ist es möglich die Sensoren als DMS o.ä. auszubilden, um den aktuellen Deformationszustand und damit verbunden den aktuellen Schwingungszustand der elastisch verformbaren Einheit 2 zu detektieren und entsprechende Sensorsignale zu generierten.

Figur 2 zeigt eine schematisierte Längsschnittsdarstellung eines Schwingungsentkopplungsmoduls SM, bestehend aus zwei mechanisch parallel geschalteten Aktormodulen A1 und A2 und einem mit dem Aktormodul A2 verbundenen Elektronikmodul E. Die Aktormodule A1 und A2 sind in entsprechender Weise gemäß den vorstehenden Ausführungen zu Figur 1 a und b ausgebildet und verfügen jeweils über eine elastisch verformbare Einheit 2, die jeweils gemeinsam mit einem einzigen Mittel 3 verbunden sind, über das die externe Last in das Schwingungsentkopplungsmodul SM einwirkt. Zur Energieversorgung, aber insbesondere auch zur Datenauswertung und geregelten Signalversorgung der Aktoren 2 ist ein Elektronikmodul E vorgesehen, das aus Gründen einer kompakten Bauform vorzugsweise in gleicher oder ähnlicher Weise bezüglich der Gehäuseausbildung ausgeformt ist, wie die Aktormodule A1 und A2. Sämtliche Module A1, A2 und E verfügen über mechanische Schnittstellen, über die eine leichte Ankopplung der Moduleinheiten unter einander möglich ist. Das Elektronikmodul umfaßt eine Leistungskonditionierung 6, die die Energie zur Ansteuerung der Aktoren aufbereitet, im Falle von Piezo-Aktoren beispielsweise in Form eines Spannungsverstärker sowie Komponenten einer Signaldatenauswerteeinheit 7 und 8, in der Sensordaten aufbereitet und ausgewertet werden um letztlich Steuersignale zur Aktivierung der Aktoren zu generieren. Vorzugsweise ist vorgesehen, die elektrische Kontaktierung zwischen den innerhalb der Aktormodule A1 und A2 enthaltenen elektronischen Bauelementen und jenen in dem Elektronikmodul E über geeignet ausgebildete Anschlußkontaktstellen (nicht dargestellt) vorzunehmen, um dem Modularitätsprinzip zu entsprechen. Je nach anfallenden Lasten bietet das Schwingungsentkopplungsmodul SM die Möglichkeit durch Hinzufügung weiterer Aktormodule die Steifigkeit der passiv elastischen Teile, d.h. der elastisch verformbaren Einheiten, zu erhöhen.

In Figur 3 ist schematisiert ein aus zwei Aktormodulen A1 und A2 sowie einem Elektronikmodul E zusammengesetztes Schwingungsentkopplungsmodul SM dargestellt, aus dessen oberem Gehäuseende das Mittel 3 emporragt, über das die externe Last L zu Zwecken einer Schwingungsentkopplung eingeleitet bzw. abgestützt wird. Das Schwingungsentkopplungsmodul SM ist an einer stabilen Unterlage 9 befestigt, so dass für eine präzise Positionierung gesorgt ist. Andererseits könnte das Modul könnte auch auf einer elastischen Struktur angebracht sein. Dies hängt jedoch vom Einsatzfall ab.

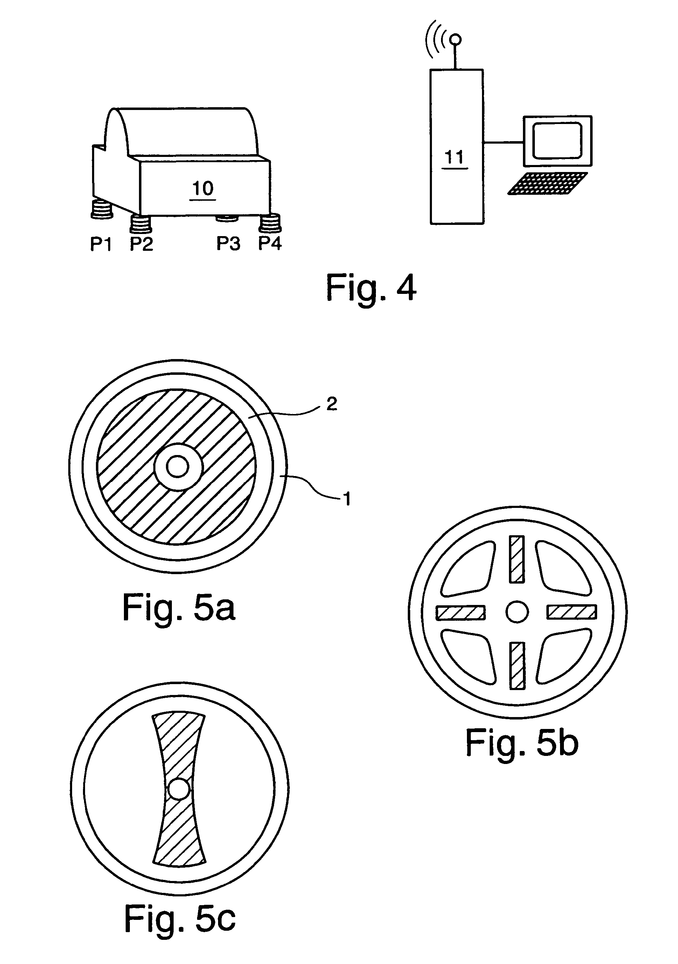

Das in Figur 4 dargestellte Ausführungsbeispiel sieht die Schwingungsentkopplung eines schwingenden Aggregates 10 vor, das an vier Unterstützungspunkten P1, P2, P3 und P4 auf entsprechend ausgebildeten Schwingungsentkopplungsmodulen SM lagert. In dieser Ausführungsvariante verfügen die einzelnen Schwingungsentkopplungsmodule SM über Telemetrieeinheiten, über die zur Ansteuerung der in den Schwingungsentkopplungsmodulen SM enthaltenen Aktoren von einem Zentralrechner 11 ausgesandte Referenzsignale übertragen und empfangen werden. Ebenso können mit Hilfe einer derartigen drahtlosen Datenkommunikationstechnik sämtliche sensorisch erfaßten Daten über den Schwingungszustand des Aggregats 10 zentral ausgewertet werden, um eine optimierte Ansteuerung der jeweiligen Aktormodule innerhalb der Schwingungsentkopplungsmodule SM zu gewährleisten.

In den Querschnittsbildem gemäß Figur 5a bis c ist ein Schnitt durch ein Aktormodul in der Ebene der membranartig ausgebildeten elastisch verformbaren Einheit 2 dargestellt. In allen Fällen ist das Modulgehäuse 1 hohlzylinderförmig ausgebildet und weist eine längs ihres gesamten Umfangsrandes mit dem Modulgehäuse 1 verbundene membranartig ausgebildete elastisch verformbare Einheit 2 auf. In Figur 5a ist an der Oberfläche der elastisch verformbaren Einheit 2 ein ringförmig ausgebildetes Aktorelement 4 vorgesehen, das eine innige und flächige Verbindung zur Einheit 2 darstellt. Im Ausführungsbeispiel gemäß Figur 5b weist die membranartig ausgebildete elastisch verformbare Einheit 2 vier Ausnehmungen 12 auf, und ist zudem an ihrer Oberfläche mit vier streifenförmig ausgebildeten Aktoren 4 verbunden. Figur 5c sieht ebenfalls einen streifenförmig mit der elastisch verformbaren Einheit 2 verbundenen Aktor in der dargestellten Form auf. Alle in Figur 5 dargestellte Ausführungsbeispiele dienen dazu, die membranartig ausgebildete elastisch verformbare Einheit senkrecht zu ihrer Ebene, d.h. senkrecht zur Zeichenebene gezielt zu deformieren, um einen bezüglich der schwingenden Beanspruchung mindernden Effekt zu erzielen, beispielsweise durch Einleiten entsprechend zum externen Lasteintrag gegenphasigen Schwingungen.

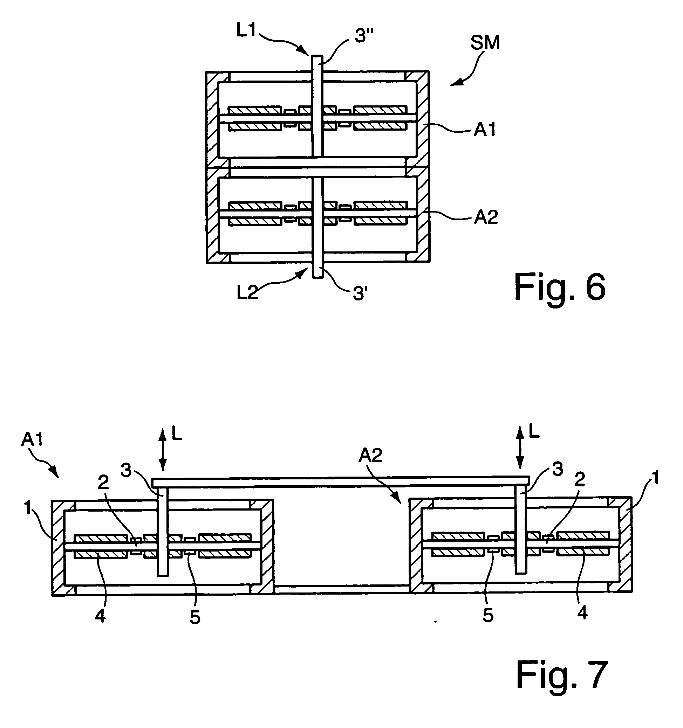

Fig. 6 zeigt analog zu Fig. 2 eine mechanische Serienschaltung von Modul A1 und A2, wobei im Gegensatz zum Ausführungsbeispiel gemäß Figur 2 das stabartig ausgebildete Mittels 3 getrennt ausgeführt ist. So kann über das Mittel 3' ein Krafteintrag L1 auf die elastisch verformbare Einheit 2 des unteren Aktormoduls A2 unabhängig von einem Krafteintrag L2 über das Mittel 3" auf die elastisch verformbare Einheit des oberen Aktormoduls A1 erfolgen. Bei einer derartigen seriellen Anordnung und Betriebsweise wenigstens zweier Aktoren kann bei hinreichend kleinen wirksamen Beanspruchungen bzw. geringen Steifigkeiten eine Verdopplung des aktorischen Weges erzielt werden, wohingegen im gekoppelten Fall gemäß der Ausführungsform in Figur 2 eine Verdopplung der Steifigkeit erreicht wird. Eine Alternative zur Ausführungsform in Figur 2 ist in Figur 7 dargestellt, das eine weitere Art der mechanischen Parallelschaltung von mehreren Aktormodulen darstellt. In diesem Fall sind die beiden Aktormodule A1 und A2 über eine gemeinsame Grundplatte G miteinander verbunden. Ebenso sind die Mittel 3 der Aktormodule A1 und A2 über ein Joch J miteinander verbunden, so dass sie über einen gemeinsamen Lasteintrag L gleichzeitig ausgelenkt werden.

Das vorstehend erläuterte Schwingungsentkopplungsmodul weist somit folgende Vorteile auf:
- Das System ist voll integrationsfähig und bietet sowohl bezüglich der Montierbarkeit als auch bezüglich der Robustheit große Vorteile;
- Die Kombination einer über eine definierte Steifigkeit verfügenden, membranartig ausgebildeten elastisch verformbaren Einheit mit der Applikation und/oder Integration flächig ausgebildeter Aktoren erlaubt eine besonders kompakte Realisierung eines aktiv-passiven Schwingungsentkopplungssystems;
- Durch die zusätzliche Applikation und/oder Integration von flächigen Sensoren auf der membranartig ausgebildeten elastischen verformbaren Einheit kann die Robustheit sowie Kompaktheit eines derartigen Schwingungsentkopplungsmoduls verbessert werden.
- Durch den gezielten Einsatz der digitalen Signalverarbeitung eröffnet sich die Möglichkeit, adaptive digitale Regler zu realisieren, wodurch trotz Veränderungen in den Störsignalen oder in den Systemeigenschaften für eine optimale Schwingungsentkopplung gesorgt wird.
- Des Weiteren ist es möglich, auf Basis der digitalen Signalverarbeitung eine Kommunikation mit einem extern vorgesehenen Rechner zu realisieren, um den Austausch von Diagnosedaten zu ermöglichen. Dies verbessert die Möglichkeit der Wartung eines derartigen Systems zumal die Bereiche, an denen die Schwingungsentkopplungsmodule angeordnet sind zumeist schwer zugänglich sind und überdies zu Servicezwecken nicht einfach zu demontieren sind.

### Bezugszeichenliste

- 1: Modulgehäuse
- 2: elastisch verformbare Einheit
- 3: Mittel
- 4: Aktor
- 5: Sensor
- 6: Energieeinheit
- 7, 8: Komponenten einer Signaldatenauswerteeinheit
- 9: Unterlage
- 10: schwingendes Aggregat
- 11: zentraler Rechner
- 12: Ausnehmung

## Patentansprüche

1. Vorrichtung zur Schwingungsentkopplung mit wenigstens einem einen Lasteintrag aufnehmenden Mittel (3), das mit wenigstens einer, wenigstens in Wirkrichtung des Lasteintrages elastisch verformbaren Einheit (2) verbunden ist, die gegenüber einer Abstützeinheit wenigstens längs der Wirkrichtung, längs der zumindest ein Teil des Lasteintrags erfolgt, schwingend gelagert ist, und wenigstens einer Sensor-Aktoreinheit (4, 5), die ein Last bedingtes Schwingen des Mittels (3) erfasst und dem Schwingen des Mittels (3) aktorisch entgegenwirkt, wobei an der wenigstens einen elastisch verformbaren Einheit (2) wenigstens ein die Verformung beeinflussender Aktor (4) derart appliziert oder in der Einheit integriert ist, dass der Aktor (4) eine der Last bedingten elastischen Verformung innerhalb der Einheit (2) entgegenwirkende Verformung initiert,
**dadurch gekennzeichnet, dass** die Abstützeinheit modulartig ausgebildet ist und als Tragstruktur für die wenigstens eine elastisch verformbare Einheit (2) dient,
dass die modulartige Abstützeinheit samt der wenigstens einen elastisch verformbaren Einheit (2) und dem Mittel (3) zur Lastaufnahme als Aktormodul derart ausgebildet ist,
dass eine mechanische Kopplung zu wenigstens einem weiteren gleichartig ausgebildeten Aktormodul möglich ist, wobei die modulartig ausgebildeten Abstützeinheiten der wenigstens zwei Aktormodule in einem gekoppelten Zustand miteinander in Wirkverbindung treten und entweder
a) die Mittel (3) zur Lastaufnahme beider Aktormodule miteinander verbunden sind oder ein einziges Mittel (3) vorgesehen ist, so dass die wenigstens eine elastisch verformbare Einheit (2) pro Aktormodul mechanisch parallel miteinander verbunden sind, oder
b) die Mittel (3) beider Aktormodule jeweils getrennt voneinander mit der wenigstens einen elastisch verformbaren Einheit (2) des jeweiligen Aktormoduls verbunden sind, so dass die elastisch verformbaren Einheiten beider Aktormodule jeweils in Serie auslenkbar sind,
dass zur Energieversorgung und/oder Signalansteuerung und/oder -auswertung des wenigstens einen Sensors (5) und Aktors (4) der einzelnen miteinander kombinierten Aktormodule eine modulartig ausgebildete Elektronikeinheit vorgesehen ist, die von einem Elektronikmodulgehäuse umfasst ist, das über wenigstens eine Verbindungsstruktur verfügt, über die das Elektronikmodulgehäuse mechanisch an wenigstens eines der kombinierten Aktormodule ankoppelbar ist, und
dass wenigstens ein elektrisches Verbindungssystem vorgesehen ist, über das der wenigstens eine Sensor (5) und/oder Aktor der (4) einzelnen miteinander kombinierten Aktormodule mit der modulartig ausgebildeten Elektronikeinheit kontaktierbar ist.

2. Vorrichtung nach Anspruch 1,
**dadurch gekennzeichnet, dass** an der wenigstens einen elastisch verformbaren Einheit (2) wenigstens ein die Verformung der Einheit (2) erfassender Sensor (5) appliziert oder in der Einheit integriert ist.

3. Vorrichtung nach Anspruch 1 oder 2,
**dadurch gekennzeichnet, dass** im Bereich des Lasteintrages und/oder im Lastpfad des Lasteintrages längs des Mittels (3) wenigstens ein die Verformung der Einheit erfassender Sensor (5) und/oder ein Kraft- und/oder ein Beschleunigungssensor vorgesehen ist.

4. Vorrichtung nach einem der Ansprüche 1 bis 3,
**dadurch gekennzeichnet, dass** die Abstützeinheit als Modulgehäuse (1) ausgebildet ist, das die elastisch verformbare Einheit (2) vollständig überragt.

5. Vorrichtung nach Anspruch 4,
**dadurch gekennzeichnet, dass** das mit der elastisch verformbaren Einheit (2) verbundene Mittel wenigstens einseitig das Gehäuse (1) überragt.

6. Vorrichtung nach einem der Ansprüche 1 bis 5,
**dadurch gekennzeichnet, dass** die elastisch verformbare Einheit (2) membranartig ausgebildet ist, eine freie Querschnittsfläche der Abstützeinheit freitragend überspannt und an wenigstens zwei Bereichen, vorzugsweise am gesamten Umfangsrand der elastisch verformbaren Einheit (2) mit der Abstützeinheit verbunden ist.

7. Vorrichtung nach einem der Ansprüche 1 bis 6,
**dadurch gekennzeichnet, dass** das Mittel (3) länglich, stabartig ausgebildet ist und über eine zur membranartig ausgebildeten, elastisch verformbaren Einheit (2) orthogonal gerichtete Längserstreckung aufweist.

8. Vorrichtung nach Anspruch 7,
**dadurch gekennzeichnet, dass** das Mittel (3) mittig zur elastisch verformbaren Einheit (2) angeordnet und mit dieser verbunden ist.

9. Vorrichtung nach einem der Ansprüche 6 bis 8,
**dadurch gekennzeichnet, dass** der wenigstens Aktor (4) flächig an der membranartig ausgebildeten, elastisch verformbaren Einheit (2) appliziert oder in dieser integriert sind.

10. Vorrichtung nach einem der Ansprüche 1 bis 9,
**dadurch gekennzeichnet, dass** der wenigstens eine Sensor (5) und/oder Aktor (4) einen Wandlerwerkstoff aufweist oder aus einem Wandlerwerkstoff besteht, der aus einer der nachstehenden Werkstoffklassen gewählt ist: Piezo-Keramik, bleifreie Piezokeramik, elektrostriktive Keramik, Formgedächtnislegierung, Formgedächtnispolymer, PVDF (Polyvinylidenfluorid), magnetostriktive Legierung oder Bi-Metalle.

11. Vorrichtung nach Anspruch 9 und 10,
**dadurch gekennzeichnet, dass** der Aktor (4) durch kontrollierte Energiezuführung eine Längenausdehnung oder eine Verkürzung erfährt, die sich durch den Kontakt mit der elastisch verformbaren Einheit (2) in Form einer entgegen der Wirkrichtung des Lasteintrages gerichteten Deformation der elastisch verformbaren Einheit (2) auswirkt.

12. Vorrichtung nach Anspruch 10 oder 11,
**dadurch gekennzeichnet, dass** durch die elastische Deformation der Wandlerwerkstoffe mechanische Energie in elektrische Energie umgewandelt wird, von der wenigstens ein Teil zum Betrieb von zumindest Teilen der Elektronikeinheit verwendbar ist.

13. Vorrichtung nach einem der Ansprüche 1 bis 12,
**dadurch gekennzeichnet, dass** innerhalb der Elektronikeinheit eine Leistungselektronik vorgesehen ist, so dass das Aktormodul weitgehend autark betreibbar ist.

14. Vorrichtung nach einem der Ansprüche 1 bis 13,
**dadurch gekennzeichnet, dass** die Elektronikeinheit auf der Basis digitaler oder analoger Signalverarbeitung aufgebaut ist.

15. Vorrichtung nach einem der Ansprüche 1 bis 14,
**dadurch gekennzeichnet, dass** die Elektronikeinheit über eine Telemetrieeinheit verfügt, über die ein drahtloser Datenaustausch zu einem getrennt von der Vorrichtung vorgesehener Steuer- und Auswerteeinheit (7, 8) möglich ist.

## Claims

1. A device for oscillation decoupling having at least one means (3), which absorbs a load introduction and which is connected to at least one unit (2), which is elastically deformable at least in the action direction of the load introduction and which is mounted to oscillate in relation to a support unit at least along the action direction along which at least a part of the load introduction occurs, and at least one sensor-actuator unit (4, 5), which detects an oscillation of the means (3) caused by the load and counteracts the oscillation of the means (3) via the actuator, at least one actuator (4), which influences the deformation, being applied to the at least one elastically deformable unit (2) or integrated in the unit in such a manner that the actuator (4) initiates a deformation which counteracts the elastic deformation within the unit (2) caused by the load,
**characterized in that** the support unit is designed to be modular and is used as a support structure for the at least one elastically deformable unit (2),
the modular support unit together with the at least one elastically deformable unit (2) and the means (3) for load absorption are designed as a an actuator module in such a manner,
that a mechanical coupling to at least one further similarly designed actuator module is possible, the modularly designed support units of the at least two actuator modules having an operational link to one another in a coupled state and either
a) the means (3) for load absorption of both actuator modules being connected to one another or a single means (3) being provided, so that the at least one elastically deformable unit (2) per actuator module are connected mechanically in parallel to one another, or
b) the means (3) of both actuator modules are each connected separately from one another to the at least one elastically deformable unit (2) of the respective actuator module, so that the elastically deformable units of both actuator modules can each be deflected in series,
for the power supply and/or signal activation and/or analysis of the at least one sensor (5) and actuator (4) of the individual actuator modules combined with one another, a modularly designed electronics unit is provided, which is enclosed by an electronics module housing, which has at least one connection structure, via which the electronics module housing can be mechanically coupled to at least one of the combined actuator modules, and
at least one electrical connection system is provided, via which the at least one sensor (5) and/or actuator (4) of the individual actuator modules which are combined with one another can be contacted with the modularly designed electronics unit.

2. The device according to Claim 1,
**characterized in that** at least one sensor (5), which detects the deformation of the unit (2), is applied to the at least one elastically deformable unit (2) or integrated in the unit.

3. The device according to Claim 1 or 2, **characterized in that** at least one sensor (5) which detects the deformation of the unit and/or a force sensor and/or an acceleration sensor is provided in the area of the load introduction and/or in the load path of the load introduction along the means (3).

4. The device according to one of Claims 1 to 3,
**characterized in that** the support unit is designed as a module housing (1), which completely protrudes beyond the elastically deformable unit (2).

5. The device according to Claim 4,
**characterized in that** the means connected to the elastically deformable unit (2) protrudes beyond the housing (1) on at least one side.

6. The device according to one of Claims 1 to 5,
**characterized in that** the elastically deformable unit (2) is designed as a membrane, spans a free cross-sectional area of the support unit in a freestanding manner, and is connected to the support unit on at least two areas, preferably on the entire peripheral edge of the elastically deformable unit (2).

7. The device according to one of Claims 1 to 6,
**characterized in that** the means (3) is designed as oblong, like a rod, and has a longitudinal extension oriented orthogonally to the membrane-like elastically deformable unit (2).

8. The device according to Claim 7,
**characterized in that** the means (3) is arranged centrally to the elastically deformable unit (2) and is connected thereto.

9. The device according to one of Claims 6 to 8,
**characterized in that** the at least one actuator (4) is applied flatly to the membrane-like elastically deformable unit (2) or is integrated therein.

10. The device according to one of Claims 1 to 9,
**characterized in that** the at least one sensor (5) and/or actuator (4) comprises a transformer material or consists of a transformer material, which is selected from one of the following material classes: piezoceramic, lead-free piezoceramic, electrostrictive ceramic, shape memory alloy, shape memory polymer, PVDF (polyvinylidene fluoride), magnetostrictive alloy, or bimetals.

11. The device according to Claims 9 and 10,
**characterized in that** the actuator (4) experiences, through controlled power supply, a length extension or a shortening, which acts through the contact with the elastically deformable unit (2) in the form of a deformation of the elastically deformable unit (2) oriented opposite to the action direction of the load introduction.

12. The device according to Claim 10 or 11,
**characterized in that**, by the elastic deformation of the transformer materials, mechanical energy is converted into electrical energy, of which at least a part is usable for operating at least parts of the electronics unit.

13. The device according to one of Claims 1 to 12,
**characterized in that** power electronics are provided within the electronics unit, so that the actuator module is operable substantially autonomously.

14. The device according to one of Claims 1 to 13,
**characterized in that** the electronics unit is constructed based on digital or analog signal processing.

15. The device according to one of Claims 1 to 14,
**characterized in that** the electronics unit has a telemetry unit, via which a wireless data exchange with a control and analysis unit (7, 8) provided separately from the device is possible.

## Revendications

1. Dispositif pour dissocier des vibrations comprenant au moins un moyen (3) recevant une application de charge, qui est relié à au moins une unité (2) élastiquement déformable au moins dans la direction d'action de l'application de charge, dans laquelle est montée de façon vibrante par rapport à une unité de soutien au moins le long de la directions de l'action, le long de laquelle au moins une partie de l'application de charge s'effectue, et au moins une unité d'actionneur-capteur (4, 5), qui détecte une vibration due à la charge du moyen (3) et s'oppose par un actionneur à la vibration du moyen (3), au moins un actionneur (4) influençant la déformation étant appliqué sur la au moins une unité (2) élastiquement déformable ou étant intégrée dans l'unité de telle sorte que l'actionneur (4) amorce une déformation s'opposant à la déformation élastique due à la charge à l'intérieur de l'unité (2),
**caractérisé en ce que** l'unité de soutien est conçue de façon modulaire et sert de structure portante pour la au moins une unité (2) élastiquement déformable, **en ce que** l'unité de soutien modulaire est conçue avec la au moins une unité (2) élastiquement déformable et le moyen (3) pour la réception de charge comme module actionneur,
**en ce qu'**un accouplement mécanique avec au moins un autre module actionneur conçu de façon similaire est possible, les unités de soutien conçues de façon modulaire des au moins deux modules actionneurs entrant en liaison active les uns avec les autres dans un état accouplé et soit
a) les moyens (3) pour la réception de charge des deux modules actionneurs étant reliés les uns aux autres ou bien un seul moyen (3) étant prévu, de sorte que les unités (2) élastiquement déformables au nombre minimum de un par module actionneur sont reliées les uns aux autres mécaniquement en parallèle, soit
b) les moyens (3) des deux modules actionneurs sont reliés à chaque fois séparément les uns des autres à la au moins une unité (2) élastiquement déformable du module actionneur respectif, de sorte que les unités élastiquement déformables des deux modules actionneurs peuvent être déviées chacune en série,
**en ce que**, pour l'alimentation en énergie et/ou l'actionnement du signal et/ou l'analyse du signal du au moins un capteur (5) et actionneur (4) des modules actionneurs individuels combinés les uns aux autres,
il est prévu une unité d'électronique conçue de façon modulaire, qui est englobée par un boîtier de module d'électronique, lequel dispose d'au moins une structure de liaison, par laquelle le boîtier de module d'électronique peut être couplé mécaniquement à au moins l'un des modules actionneurs combinés, et **en ce qu'**au moins un système de liaison électrique est prévu par lequel le au moins un capteur (5) et/ou actionneur (4) des modules actionneurs combinés individuellement les uns avec les autres peut être mis en contact avec l'unité d'électronique conçue de façon modulaire.

2. Dispositif selon la revendication 1,
**caractérisé en ce qu'**au moins un capteur (5) détectant la déformation de l'unité (2) est appliqué sur la au moins une unité (2) élastiquement déformable ou est intégré dans l'unité.

3. Dispositif selon la revendication 1 ou 2,
**caractérisé en ce qu'**au moins un capteur (5) détectant la déformation de l'unité et/ou un capteur de force et/ou un capteur d'accélération est/sont prévu(s) dans la zone de l'application de force et/ou dans le chemin de charge de l'application de charge le long du moyen (3).

4. Dispositif selon l'une des revendications 1 à 3,
**caractérisé en ce que** l'unité de soutien est conçue sous forme de boîtier de module (1), qui dépasse complètement de l'unité (2) élastiquement déformable.

5. Dispositif selon la revendication 4,
**caractérisé en ce que** le moyen relié à l'unité (2) élastiquement déformable dépasse au moins sur un côté du boîtier (1).

6. Dispositif selon l'une des revendications 1 à 5,
**caractérisé en ce que** l'unité (2) élastiquement déformable est conçue à la façon d'une membrane, chevauche en porte-à-faux une surface de section libre de l'unité de soutien et est reliée à l'unité de soutien sur au moins deux zones, de préférence sur l'ensemble de la zone périphérique de l'unité (2) élastiquement déformable.

7. Dispositif selon l'une des revendications 1 à 6, **caractérisé en ce que** le moyen (3) est conçu de façon allongée et en forme de barre et dispose d'une extension longitudinale orientée perpendiculairement par rapport à l'unité (2) conçue à la façon d'une membrane et élastiquement déformable.

8. Dispositif selon la revendication 7,
**caractérisé en ce que** le moyen (3) est disposé au centre par rapport à l'unité (2) élastiquement déformable et reliée à celle-ci.

9. Dispositif selon l'une des revendications 6 à 8,
**caractérisé en ce que** les actionneurs (4) au nombre minimum de un sont appliqués à plat sur l'unité (2) conçue à la façon d'une membrane et élastiquement déformable ou sont intégrés dans celle-ci.

10. Dispositif selon l'une des revendications 1 à 9,
**caractérisé en ce que** le au moins un capteur (5) et/ou actionneur (4) présente un matériau convertisseur ou est à base d'un matériau convertisseur qui est choisi dans l'une des classes de matériaux suivantes : piézo-céramique, piézo-céramique sans plomb, céramique électrostrictive, alliage à mémoire de forme, polymère à mémoire de forme, PVDF (fluorure de polyvinylidène), alliage magnétostrictif ou bilames.

11. Dispositif selon les revendications 9 et 10,
**caractérisé en ce que** l'actionneur (4) subit du fait de l'arrivée d'énergie contrôlée une extension en longueur ou un raccourcissement, qui se répercute par le contact avec l'unité (2) élastiquement déformable sous la forme d'une déformation, orientée dans le sens contraire à la direction d'action de l'application de charge, de l'unité (2) élastiquement déformable.

12. Dispositif selon la revendication 10 ou 11,
**caractérisé en ce que** l'énergie mécanique est transformée en énergie électrique par la déformation élastique des matériaux convertisseurs, l'énergie dont au moins une partie est utilisée pour le fonctionnement d'au moins des parties de l'unité d'électronique.

13. Dispositif selon l'une des revendications 1 à 12,
**caractérisé en ce qu'**une électronique de puissance est prévue à l'intérieur de l'unité d'électronique, de sorte que le module actionneur peut être utilisé de façon largement autonome.

14. Dispositif selon l'une des revendications 1 à 13,
**caractérisé en ce que** l'unité d'électronique est conçue sur la base d'un traitement de signal numérique ou analogique.

15. Dispositif selon l'une des revendications 1 à 14,
**caractérisé en ce que** l'unité d'électronique dispose d'une unité de télémétrie, par laquelle un échange de données sans fil avec une unité de commande et d'analyse (7, 8) prévue séparément du dispositif est possible.
